# EUROPEAN PATENT SPECIFICATION

(11) **EP 2 533 007 B1**
(45) Date of publication and mention of the grant of the patent: **02.05.2018**
(21) Application number: 11169527.6
(22) Date of filing: 10.06.2011
(51) Int. Cl.: G01B 3/10

(54) **A MEASURING DEVICE**
MESSVORRICHTUNG
DISPOSITIF DE MESURE

(43) Date of publication of application: 12.12.2012
(73) Proprietor: Hultafors Group AB, 517 21 Bollebygd (SE)
(72) Inventor: Reinius, Pelle, 167 14 Bromma (SE); Ejvinsson, Peter, 167 14 Bromma (SE)
(74) Representative: Awapatent AB

(56) References cited:
- FR-A- 1 246 890
- US-A- 3 054 573
- US-A1- 2004 020 068

## Description

### Technical Field

The present invention relates to a measuring device comprising a coiled measuring tape within a cover.

### Technical Background

Today, many measuring devices are provided with a cover in order to protect the coiled measuring tape from being damaged and also to provide the tape in a compact and easy-to-handle construction.

A typical cover comprises two cover parts that are more or less symmetrically identical to each other in relation to a symmetry plane through a middle section of the cover. Such a construction of the cover is beneficial since it provides a measuring device that is easy to assemble and that provides for a simple manufacturing method. Typically, when assembling the measuring device, one of the cover parts is provided with the coiled measuring tape and other pieces of the measuring device, such as screws, springs, etc. Thereafter, the other cover part is connected to the first cover part, such that the coiled measuring tape and the other pieces are enclosed within the cover. Moreover, the two cover parts may typically be connected to each other by means of a screw connection.

US3054573 discloses tape measure for usage in logging operations to measure the lengths of fallen logs. The tape measure consists of three interrelated systems, each being independently housed within an integral assembly.

US2004/0020068 discloses a tape rule housing with a grip. The housing is provided with a separately fabricated grip or a grip in one piece with the housing such that the user is able to grasp the grip conveniently and firmly when handling the tape rule instead of holding entire bulky housing unstably.

FR1246890 discloses a key holder with a tape measure.

However, a disadvantage of having a cover made of two cover parts may be that in the case of dropping the cover to the ground, or in any other way exposing the cover to an impact situation, the two cover parts may be exposed to a torque in relation to each other. In such a case, the coiled measuring tape and any other pieces inside the cover may be destroyed. Therefore, there is a need to further increase the torsional rigidity of the measuring device.

### Summary of the Invention

In view of the above mentioned and other drawbacks of the prior art, an object of the present invention is to mitigate the drawbacks of the prior art.

This and other objects, which will be apparent in the following, are at least partly met by a measuring device as defined in the accompanying claims.

The present invention is based on the insight that, contrary to the prior art in which screws only extend inside the cover to connect the two cover parts, a connecting element may be arranged on the outside for keeping the cover parts together. Thereby, an improvement in torsional rigidity of the cover is achieved which may make the cover less fragile when, for example, accidently dropped to the ground. The invention is also based on the insight that an external connecting element may present the additional beneficial effect of providing access to a securing means, such as a string, cord or hook, etc for coupling the measuring device to a user's garment or other belongings, thereby further reducing the risks related to accidental dropping of the measuring device.

According to an aspect of the invention, a measuring device according to claim 1 is provided. The measuring device comprises: a cover comprising a first and second cover part which are interconnected to each other, thereby forming an interface between the first and second cover parts, wherein the first cover part comprises a first fixing means and the second cover part comprises a second fixing means, a coiled measuring tape arranged within the cover and being extendable/retractable via an opening in the cover, and a connecting element positioned at a periphery of the cover and connected to the first and second fixing means, the connecting element forming a bridging portion extending across the interface in a direction from the first cover part to the second cover part, wherein a passage is formed under a lower surface of the bridging portion, which lower surface is directed towards the cover.

The wording "lower surface" should be understood to mean the opposite side of the bridging portion compared to the surface which is directed away from the cover of the measuring device, *i.e.* the lower surface is not facing the user when being used. Hence, the wording "under" should therefore be interpreted as a space which is formed between the lower surface of the connecting element and the cover. However, it should be noted that the claimed invention is equally applicable having yet another surface formed between the bridging portion and the cover. In such a case the passage is formed between the lower surface of the connecting element and that other surface.

An advantage of having a connecting element forming a bridging portion is that, for example, a string or flexible cord may be attached to the connecting element. Hereby, the cover may be securely connected, via the string or flexible cord, to a belt or the user's trouser. In the case of accidently dropping the measuring device, the measuring device is thus safely attached to the user's clothes.

Furthermore, it should be noted that the passage may be arranged in many different directions and forms. For example, the passage may be formed diagonal or parallel in relation to a geometric plane of the coiled measuring tape, or it may even be formed in a curved manner. Thus, the skilled person understands that, since the bridging portion of the connecting element extends in a direction from the first cover part to the second cover part, there are numerous alternative manners for the passage to extend non-perpendicularly to the geometric plane of the coiled measuring tape. It should be noted that the geometric plane of the coiled measuring tape would generally coincide with the geometric plane formed by the interface between the first and second cover parts.

According to at least one example embodiment of the present invention, the connecting element comprises a first and a second attachment portion spaced from each other.

The attachment portions may be positioned laterally to the extension of the bridging portion or they may be positioned such that the bridging portion extends in a direction between the attachment portions.

According to at least one example embodiment, the first and second attachment portions are each connected to both of the first and second fixing means.

Hereby, the connecting element may be positioned in a direction which is parallel, or coinciding with the geometric plane of the coiled measuring tape. Furthermore, an advantage of having each of the first and second attachment portions connected to both of the first and second fixing means is that the connecting element connects the cover portions at two positions on each of the first and second cover parts, which may further increase the strength of the cover.

According to at least one example embodiment, the first attachment portion is connected to the first fixing means and the second attachment portion is connected to the second fixing means.

Hereby, the connecting element is extending from the first cover part to the second cover part. However, it should be noted that the wording of first and second fixing means as well as first and second attachment portions does not exclude more than one connection for each side of the respective cover parts. For example, the first attachment portion may comprise a plurality of sub-portions connected to a plurality of first fixing means on the first cover part.

According to the present invention, the cover comprises a recess, wherein the passage is defined by the recess and the bridging portion of the connecting element.

This may enable, for example, a string or flexible cord of a thicker dimension to be connected to the connecting element, as the recess may provide a wider passage between the connecting element and the cover. This also enables the connecting element and its bridging portion to lie closely and substantially flat against the area of the cover parts surrounding the recess, thus avoiding extensive dimensional enlargement of the measuring device. Furthermore, the recess may be formed in the first cover part, the second cover part or in both of the first and second cover parts. The latter alternative is reflected in at least one example embodiment, wherein the recess is formed by a first recess portion on the first cover part and a second recess portion on the second cover part.

According to yet another embodiment, a geometric axis of the passage is substantially in the same plane as the coiled measuring tape.

The wording "geometric axis" should be interpreted as the centre axis of the passage where the string or flexible cord can be provided through the passage.

Moreover, the first and second fixing means comprise a threaded hole adapted to receive a screw for connection of the connecting element.

A screw connection is simple in its design and provides a connecting element which is easy to assemble and/or dismount. Furthermore, a screw connection may be configured such that it can sustain large impact pressure if the measuring device is dropped to the ground, especially if the drop is from a significant height. It should be understood that the attachment portions on the connecting element may be suitably, designed, e.g. with one or more screw holes/connecting holes, for attaching the connecting element to said first and second fixing means of the cover parts.

According to at least one example embodiment, the attachment portions and/or the first and second fixing means comprise protrusions for providing a snap connection between the cover and the connecting element.

An advantage of a snap connection is that the connecting element is easy to assemble/dismount without the use of a tool. It is also conceivable to provide the measuring device with multiple-type fixing means, e.g. suitable for both snap connection and screw connection. In such case, the measuring device would be allowed to receive either type of connecting element. Furthermore, a connecting element may also be provided with snap means (e.g. protrusions and/or notches, or the like) as well as screw holes. Thus, such a connecting element could be snapped into place and further secured by means of one or more screws. Moreover, the attachment portions and the fixing means may be glued to each other.

According to at least one example embodiment of the invention, the opening is positioned at a front portion of the cover and the connecting element is positioned at a rear portion of the cover.

The front portion of the cover should be understood to mean the distance along the cover from the opening of the cover to a geometric plane at the centre of the coiled measuring tape, where the geometric plane is perpendicular to the above mentioned interface between the two cover parts as well as perpendicular to the geometric plane formed by the coiled measuring tape when being extended. Hence, the rear portion of the cover comprises the remaining part of the cover.

According to at least one example embodiment of the present invention, the connecting element is of a metallic material.

A metallic material may be beneficial since it can provide a connection with relatively high strength. Such a metallic material may preferably be steel or a metal having approximately similar strength. However, it should be noted that the present invention is not limited to the use of a metallic material like steel; other materials may also be used, such as for example plastic or rubber, or other type of softer metals.

According to at least another example embodiment the measuring device is a long tape type of measuring device.

The long tape type of measuring device may have a cover which partly covers the coiled measuring tape. In such a case, the coiled measuring tape may be visibly exposed to the user. A long tape type of measuring device generally comprises a winding handle for rewinding the uncoiled/extended measuring tape. On the contrary, a short tape type of measuring device should be interpreted as a measuring device that may suitably comprise a spring mechanism for rewinding the uncoiled/extended measuring tape. The spring mechanism may suitable have lock and means for releasing the lock (e.g. a release button) in order to actuate the rewinding action of the spring mechanism.

According to the invention, the cover completely covers the coiled portion of the measuring tape.

Hereby, the coiled portion is not visibly exposed to the user. This may have the advantage that the coiled measuring tape is protected from exterior damage.

It should be understood that although the connecting element provides various benefits over the traditional connection in which a screw extended inside the cover to connect a first cover part to a second cover part, such internal screw connection is not excluded from the invention. On the contrary, according to at least one example embodiment, the measuring device comprises a fastening means, such as a screw or a bolt, which extends inside the cover from the first cover part to the second cover part, thereby providing further connecting force between the two cover parts.

### Brief description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 a is a perspective view of an embodiment of the present invention,
Fig. 1b is a detailed view illustrating the connection of the connecting element according to the embodiment of Fig. 1a,
Fig. 2a illustrates in detail another embodiment of the connecting element according to the present invention,
Fig. 2b illustrates the connection of the connecting element according to the embodiment of Fig. 2a,
Fig. 3a illustrates the connection of yet another embodiment of the connecting element,
Fig. 3b is a perspective view of the assembled embodiment of Fig. 3a having a string attached to the connecting element,
Fig. 4 is a perspective view of a long tape type of measuring tape having a connecting element according to an example not falling under the scope of the claims, and
Fig 5 illustrates yet another embodiment of the connecting element, here connected to one of the cover parts of the cover.

### Detailed Description of Exemplary Embodiments of the Invention

The present invention will now be described more fully hereinafter with reference to the accompanying drawings, in which exemplary embodiments of the invention are shown. This invention may, however, be embodied in many different forms and should not be construed as limited to the embodiments set forth herein; rather, these embodiments are provided for thoroughness and completeness. Like reference characters refer to like elements throughout.

In the following description, the present invention is described with reference to a connecting element 102 arranged to be connected to a cover 104 of a measuring device 100. In more detail, the cover 104 of the measuring device 100 is provided by at least two cover parts 106, 108 and the connecting element 102 is connected to each of these at least two cover parts 106, 108 respectively.

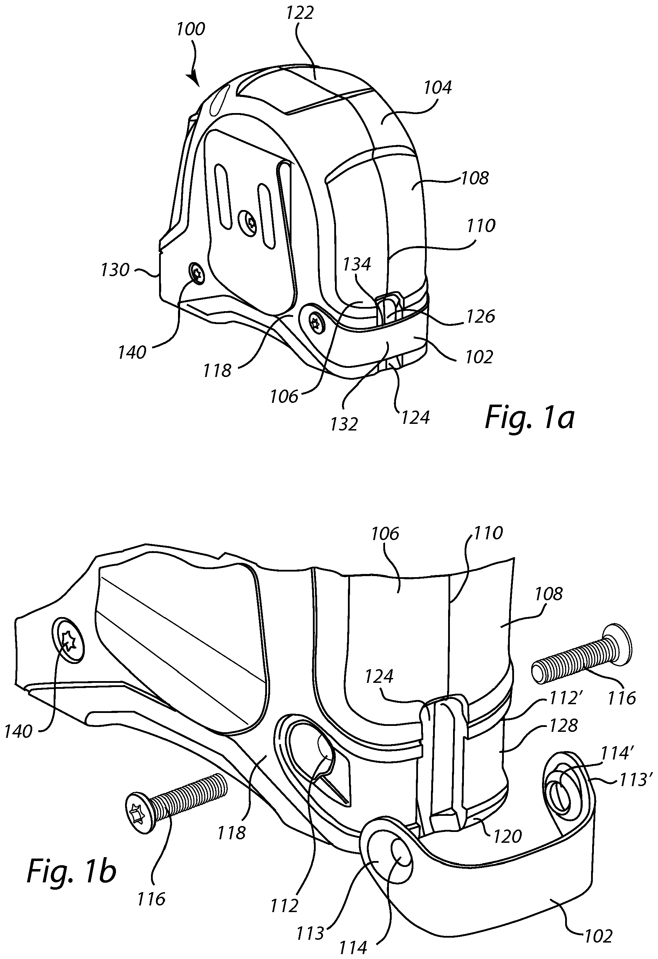

Figs. 1 a - 1b illustrates an embodiment of the measuring device 100 according to the present invention. The measuring device 100 comprises a cover 104 for protection and sealing of a coiled measuring tape located inside the cover (not illustrated here). The coiled measuring tape may be advanced/extended from the cover 104, through an opening (not shown) located at a front area 130 of the cover 104. The cover 104 of the measuring device 100 comprises a first 106 and a second 108 cover part, which together forms an interface 110 there between. Each of the cover parts 106, 108 are provided with fixing means, here illustrated as a threaded hole 112, 112'. Moreover, the connecting element 102, having connecting holes 114, 114' at its outer edge portions, is connected to each of the first 106 and second 108 cover parts at the threaded holes 112, 112' by means of screws 116. Thus, the outer edge portions having the connecting holes 114, 114' function as attachment portions 113, 113' of the connecting element 102. In the illustrated embodiment, the screws 116 connect the connecting element 102 to the cover 104 at an outer surface 118 of each of the cover parts 106, 108. Furthermore, the threaded holes 112, 112' are in the illustrated embodiment of Figs. 1a - 1b positioned opposite to each other, such that the connecting element 102 extends in a direction which is perpendicular to the above mentioned interface 110. However, it should be noted that the threaded holes 112, 112' may just as well be positioned differently for each of the cover parts 106, 108, such that the connecting element 102 is, for example, formed in a diagonal direction in relation to the interface 110 between the cover parts 106, 108.

Still further, as illustrated in fig 1a, the connecting element 102 is positioned at a rear side 120 of the cover 104. However, the connecting element 102 may just as well be located at any position along the periphery of the cover 104, preferably on a rear part of the cover, *i.e.* from the upper side 122 to the rear side 120 of the cover 104.

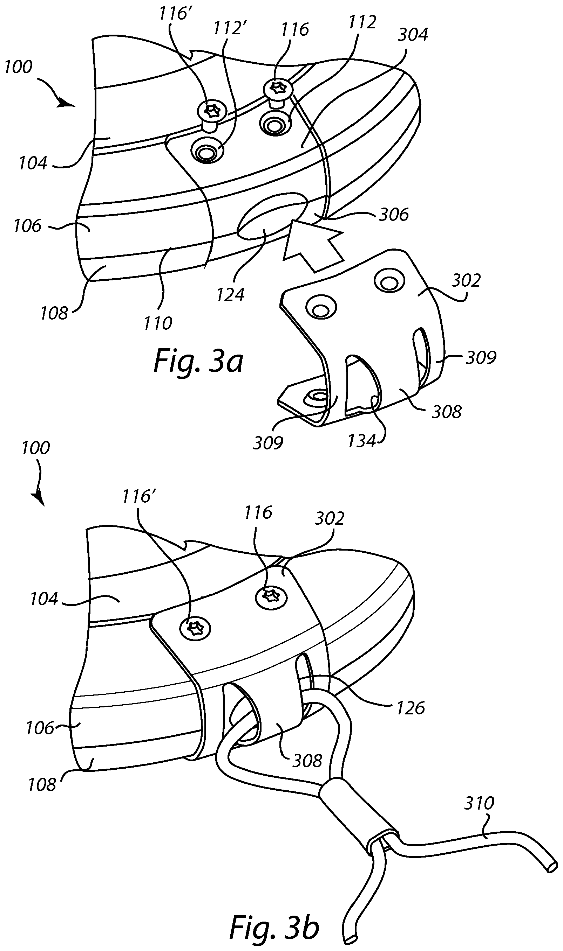

Furthermore, as also illustrated in Figs. 1a - 1b, the cover 104 comprises a recess 124. In the illustrated embodiment, the recess 124 extends between the cover parts 106, 108 in a direction which is perpendicular to the direction of the connecting element 102. In other words, since the complete recess 124 is formed by joining of the two cover parts 106, 108, the recess 124 extends in the same geometric plane as the interface 110. However, the recess 124 does not necessarily have to be provided between the cover parts 106, 108, it may just as well be located in one of the cover parts and in a direction which is diagonal or curved shaped in relation to the connecting element 102. A bridging portion 132 is formed by the connecting element 102 over the recess 124. Thus, the bridging portion 132 extends in a direction from the first cover portion 106 towards the second cover portion 108. The recess 124, in combination with the bridging portion 132, forms a passage 126 which may be suitable for connection of, for example, a string or flexible cord, which in turn can be connected to, for example, the clothes of a user for securely connecting the measuring device 100 when being used. This will be further illustrated and described below in relation to fig. 3b.

Still further, as is illustrated in detail in Fig. 1b, the cover parts 106, 108 comprise a cut-out or depression 128 at the position where the connecting element 102 is to be connected to the cover 104. The cut-out or depression 128 may preferably have an approximately similar shape and depth as the connecting element 102 such that the connecting element 102 can be visibly integrated in the cover 104, thus lying substantially flush with the area of the cover surrounding the recess 124.

In Figs. 1a - 1b the connecting element 102 has been illustrated as having a substantially U-shaped configuration, wherein the bridging portion 132 forms the centre of the U and the attachment portions 113, 113' form the legs of the U. Although the attachment portion 113, 113' have been illustrated as flanged portions, which are substantially perpendicular to the bridging portion, other alternative configurations are conceivable.

The measuring device 100 may further be provided with an additional connecting or fastening means 140, such as a screw, wherein the fastening means extends inside the cover 104 to connect the cover parts 106, 108.

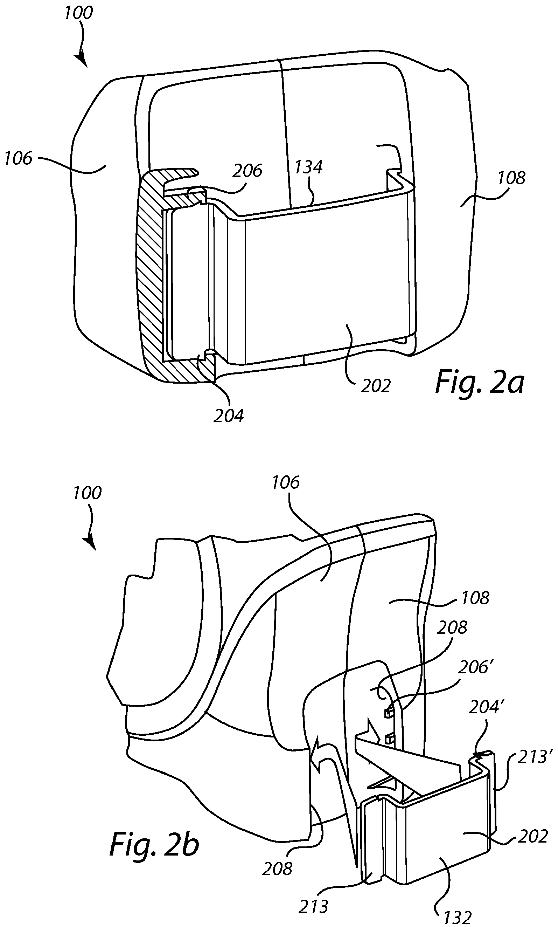

Now referring to Figs. 2a - 2b, which illustrate another embodiment of the measuring device according to the present invention. A similar measuring device 100 as illustrated in Figs. 1a - 1b is provided but with a connecting element 202 having a clip or snap connection for connection to each of the cover parts 106, 108. As is illustrated in Figs. 2a - 2b, the cover parts 106, 108 are provided with fixing means, herein illustrated as protruding portions 206, 206', which comprise appropriate abutment or locking surfaces. The outer edge portions or attachment portions 213, 213' of the connecting element 202 are also provided with protruding portions 204, 204' having appropriate mating abutment or locking surfaces. These protruding portions 204, 204', 206, 206' form a snap connection between the connecting element 202 and each of the cover parts 106, 108. When assembling the connecting element 202 to the cover 104, the outer edges (attachment portions 113, 113') of the connecting element 202 are positioned in connection to the protrusions 206, 206' of the cover 104. Hence, there is thus no need of using a tool for connection of the connecting element 202 to the cover 104.

It may be noted, that in the embodiment of Figs. 2a - 2b, the attachment portions 213, 213' lie in a plane which is parallel to the plane of the bridging portion 132, in contrast to the embodiment of Figs. 1a - 1b, in which the attachment portions 113, 113' lie in a plane which is perpendicular to the plane of the bridging portion 132. However, it should be understood that other alternatives are conceivable. For instance, the attachment portions could lie in the same plane as the bridging portion.

The snap connection according to Figs. 2a - 2b illustrates a connecting element which is connected to protrusions 206, 206' on an inner side 208 of each of the cover parts 106, 108. However, the protruding portions 206, 206' may just as well be located on the outer surface118 of the cover parts 106, 108, on a similar position as the threaded holes 112 illustrated in relation to Figs. 1a - 1 b. In such a case, the connecting element 202 may have a length which is similar to the length of the connecting element 102 illustrated in Fig. 1b and wherein the connecting element in such a case may be biased, such that the outer edges are pressing against the outer surface 118 of the respective cover parts 106, 108 when being assembled.

Figs. 3a - 3b illustrate yet another example embodiment of the present invention. As can be seen, the cover parts 106, 108 comprise a section 304 for connection of the connecting element 302. The section 304 is in the illustrated embodiment of Fig. 3a a cut-out part or a depression 306 which is configured to receive the connecting element 302 when being assembled. As described in relation to Figs. 1 a - 1b, the cut out part or depression 306 may have an approximately similar shape as at least a part of the connecting element 302 such that the connecting element 302 can be visibly integrated in the cover 104. Furthermore, on each side of the cover parts 106, 108 there is provided fixing means in the form of two threaded holes 112, 112' for connection of the connecting element 302 with two corresponding screws 116, 116'.

Moreover, the connecting element illustrated in Figs. 3a - 3b have a separate bridging portion 308, which is configured for connection of, for example, a string or flexible cord 310, etc. By connection of such a string or flexible cord 310, the measuring device 100 may, at the other end of the string or flexible cord 310, be connected to the user's clothes for a secure connection of the measuring device 100.

In the same manner as illustrated in Figs. 1a - 2b, the cover 104 illustrated in Figs 3a - 3b comprises a recess 124. The recess 124 enables a string or flexible cord 310 of increased thickness to be connected to the connecting element 302 compared to a cover 104 without a recess, *i.e.* the "volume" provided between the bridging portion 308 and the cover 104 may be increased by having a recess 124 in the cover 104. It should however be noted that the connecting element illustrated in Figs. 3a - 3b may also be configured such that the connecting element 302 is not open, *i.e.* the part of the cover 104 below the connecting element 302, between each of the screw connections on each of the cover parts 106, 108, is not visibly available to the user when the connecting element 302 is assembled to the cover 104. In such a case, the passage 126 for connecting a string or flexible cord 310 is provided between the bridging portion 308 and an underlying portion of the connecting element 302. In that particular case the recess may be omitted.

Furthermore, the embodiment illustrated in Figs. 3a - 3b may also use the above mentioned clip connection for connection of the connecting element 302 to each of the cover parts 106, 108 instead of the illustrated screw connection.

In Figs. 3a - 3b, the bridging portion 308 is illustrated as having a generally curved or arched shape. Other alternatives are conceivable, such as being formed of straight sections rather than curved. Furthermore, in Figs. 3a - 3b, two lateral portions 309 are illustrated on each lateral side of the bridging portion 308, and just like the bridging portion 308, the lateral portion 309 extend in a direction from the first cover part 106 to the second cover part 108. While the bridging portion 308 is raised from the cover 104, thus forming the passage 126 beneath its lower side, the lateral portions 309 are illustrated as lying against the cover 104 without any passage under their respective lower side. A conceivable alternative would be to have a wider extension of the lateral portions 309 so that they meet underneath the bridging portion 308, whereby the joined lateral portions would form a floor of the passage while the bridging portions 308 forms a roof of the passage. Another conceivable alternative would be to have also the lateral portions 309 raised from the cover 104 (and optionally formed continuously with the bridging portion 308 along the interface 110). Another alternative would be to completely omit the lateral portions 309. The illustrated measuring device illustrated in Figs. 3a - 3b may be a closed case long tape type of measuring device having a hand crank for rewinding the extended measuring tape.

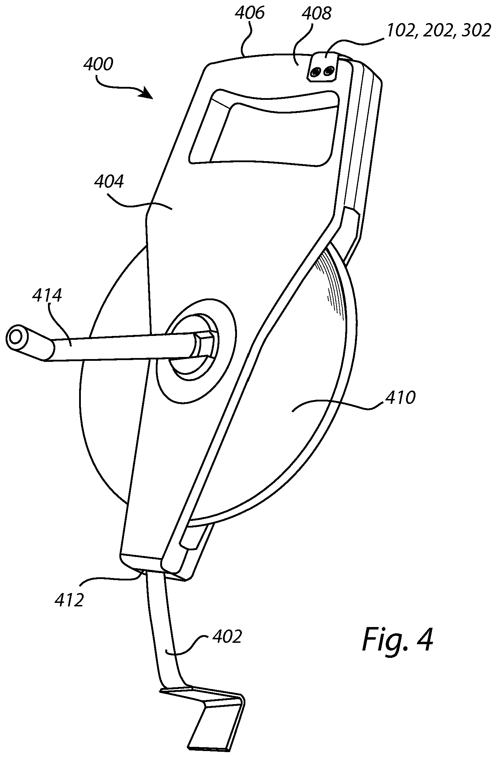

Now referring to Fig 4, which illustrates one of the above mentioned connecting elements 102, 202, 302 arranged on an open case long tape type of measuring device 400. The measuring device 400 comprises a measuring tape 402 which may be up to approximately 50 metres. Typically, the measuring tape 402 of the long tape type of measuring device 400 is of a soft plastic-type of material compared to the measuring tape of the measuring devices illustrated in Figs. 1 a - 3b which may be of a stiffer metal material. The cover 404 of the measuring device 400 is in the illustrated example not fully covering the coiled portion 410 of the measuring tape 402. Nevertheless, the coiled portion 410, having a plate or disc shape, is on both sides partly covered by a respective cover part. At a rear end 406 of the cover 404 there is provided a gripping portion 408 arranged such that a user can grip the measuring device 400 in a convenient manner. At a front portion of the cover 404, there is provided a mouth or opening 412 through which the measuring tape 402 may be pulled out and uncoiled. A winding handle 414 connected to a drum or the like (not shown) is provided for rewinding the measuring tape 402 to a coiled state on the drum.

Furthermore, the connecting element 102, 202, 302 is provided to the measuring device 400 at the rear end 406 in connection to the gripping portion 408. The connecting element may be configured in the same manner as previously described in relation to Figs. 1 a - 3b. Hence, it may be connected to the cover by means of screw connections or snap connections. Moreover, the cover 404 may comprise a recess 124 in the same manner as described in relation to the embodiments illustrated in Figs. 1a - 3b as well. It should, however, be noted that the example illustrated in Fig. 4 is not limited to a cover 404 which is not fully covering the coiled portion 410 of the measuring tape 402, it may just as well completely cover the coiled portion of the measuring tape, similar to the embodiment illustrated in relation to Fig. 1 a, in which case it falls under the scope of the claims.

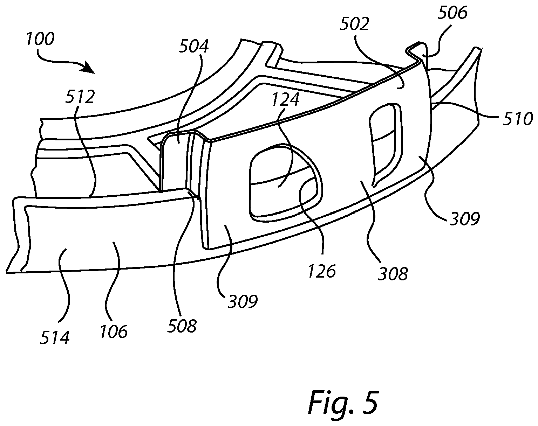

Now referring to Fig. 5, which illustrates yet another example embodiment of the connecting element according to the present invention. The measuring device 100 is in the illustrated embodiment of the same type as the one illustrated in relation to Figs. 3a - 3b. However, the person skilled in the art realizes that the connecting element in Fig. 5 is just as applicable for any type of measuring device.

The connecting element 502 illustrated in Fig. 5 is a similar connecting element as illustrated in Figs. 3a - 3b but having other attachment portions 504, 506 for connecting the connecting element 502 to the cover parts 106, 108. Therefore, the following description relating to Fig. 5 will only focus on the attachment portions 504, 506 and the connection to the cover parts 106, 108.

As can be seen in Fig. 5, the connecting element 502 is connected to the first cover part 106. The first cover part 106 comprises two fixing means, here illustrated as two opposing cut-outs 508, 510, which are arranged to receive the first 504 and second 506 attachment portions of the connecting element 502. The opposing cut-outs 508, 510 are in the illustrated example embodiment positioned on each side of the above mentioned recess 124 and are arranged perpendicular to the passage 126. Furthermore, the cut-outs 508, 510 are provided as through-lines, such that the attachment portions 504, 506, in the assembled configuration, are positioned on an inner side 512 of the cover parts 106, 108 and the bridging portion 308 and the two lateral portions 309 of the connecting element 502 are positioned on an outer side 514 of the cover parts 106, 108. The inner side 512 of the cover parts 106, 108 should be understood to mean the part of the cover where the coiled portion of the measuring tape is located, *i.e.* the part of the cover which is not visibly available to the user when being used.

Furthermore, when the first 504 and second 506 attachment portions have been connected to the first cover part 106, the second cover part 108 is connected to the first 504 and second 506 attachment portions accordingly (not shown here). Hence, the first 504 and second 506 attachment portions are both connected to the first 106 and second 108 cover parts.

Similar as described in relation to Figs. 2a - 2b, the attachment portions 504, 506 of the connecting element 502, as well as the cover parts 106, 108, may comprise protrusions for providing a snap connection between the cover parts 106, 108 and the attachment portions 504, 506. However, the skilled person realise that the connection between the cover parts 106, 108 and the attachment portions 504, 506 may come in other forms as well. For example, screws 116, 116' may be provided at holes 112, 112' through the cover parts 106, 108 and connected to the attachment portions 504, 506 positioned on the inner side 512 of the cover parts 106, 108. Also, the attachment portions 504, 506 may just as well be located on the outer side 514 of the cover parts 106, 108 and connected to the cover parts 106, 108 by a clip connection, screws or hooks, etc, such that the entire connecting element 502 is positioned on the outer side 514 of the cover parts 106, 108.

The above described connecting elements illustrated in Figs. 1a - 5 may preferably be of a metallic material, such as steel. However, other materials may also be used, such as plastic or other types of metals. Furthermore, although some embodiments of the connecting element have been illustrated for long tape type of measuring devices and others for short tape type of measuring devices, it should be noted that all embodiments of the connecting element is applicable for both types of measuring devices.

Although exemplary embodiments of the present invention have been described herein, it should be apparent to those having ordinary skill in the art that a number of changes, modifications or alterations to the invention as described herein may be made. For example, it may not be necessary to provide a cut-out or depression at the position where the connecting element is assembled, the invention is just as applicable without such cut-out or depression. Furthermore, the connecting element may be connected to each of the cover parts by other means than a screw connection or a snap connection. For example, the connecting element may be connected by gluing or welding etc. It should also be noted that the different embodiments illustrated in the figures are each applicable for any type of measuring devices having at least two cover parts. Thus, the above description of the various embodiments of the present invention and the accompanying drawings are to be regarded as non-limiting examples of the invention and the scope of protection is defined by the appended claims. Any reference signs in the claims should not be construed as limiting the scope of the invention, which is defined by the appended claims.

## Claims

1. A measuring device (100) comprising:
a cover (104) comprising a first (106) and a second (108) cover part which are interconnected to each other, thereby forming an interface (110) between said first (106) and second (108) cover parts, wherein said first cover part (106) comprises a first fixing means (112, 206, 508) and said second cover part (108) comprises a second fixing means (112', 206', 510),
a coiled measuring tape arranged within said cover (104) and being extendable and retractable via an opening (412) in said cover (104), and
a connecting element (102, 202, 302, 502) positioned at a periphery of said cover (104) and connected to said first (112, 206, 508) and second (112', 206', 510) fixing means, said connecting element (102, 202, 302, 502) forming a bridging portion(132, 308) extending across said interface (110) in a direction from said first cover part (106) to said second cover part (108), wherein a passage (126) is formed under a lower surface (134) of said bridging portion (132, 308), which lower surface (134) is directed towards said cover (104), **characterized in that**
said cover (104) completely covers the coiled portion of said measuring tape,
wherein said cover (104) comprises a recess (124) and wherein said passage (126) is defined by said recess (124) and said bridging portion (132, 308) of said connecting element (102, 202, 302, 502).

2. The measuring device (100) according to claim 1, wherein said connecting element (102, 202, 302, 502) comprises a first (113, 213, 114, 204, 504) and a second attachment portion (113', 213', 114', 204', 506) spaced from each other.

3. The measuring device (100) according to claim 2, wherein the first (504) and second (506) attachment portions are each connected to both of said first (508) and second (510) fixing means.

4. The measuring device (100) according to claim 2, wherein said first attachment portion (113, 213, 114, 204) is connected to said first fixing means (112, 206) and said second attachment portion (113', 213', 114', 204') is connected to said second fixing means (112', 206').

5. The measuring device (100) according to claim 1, wherein said recess (124) is formed by a first recess portion on the first cover part (106) and a second recess portion on the second cover part (108).

6. The measuring device (100) according to any one of the preceding claims, wherein a geometric axis of said passage (126) is substantially in the same plane as said coiled measuring tape.

7. The measuring device (100) according to any one of the preceding claims, wherein said first (112, 206) and second (112', 206') fixing means comprise a threaded hole adapted to receive a screw (116) for connection of said connecting element (102, 202, 302).

8. The measuring device (100) according to any one of claims 1 to 6, wherein said attachment portions (113, 113', 213, 213', 114, 114', 204, 204', 504, 506) and/or said first (112, 206, 508) and second (112', 206', 510) fixing means comprise protrusions for providing a snap connection between said cover (104) and said connecting element (102, 202, 302, 502).

9. The measuring device (100) according to any one of the preceding claims, wherein said opening is positioned at a front portion of said cover (104) and said connecting element (102, 202, 302, 502) is positioned at a rear portion of said cover (104).

10. The measuring device (100) according to any one of the preceding claims, wherein the connecting element (102, 202, 302, 502) is of a metallic material.

11. The measuring device (100) according to any one of the preceding claims, wherein said measuring device is a long tape type of measuring device.

12. The measuring device (100) according to any one of the preceding claims, comprising a fastening means (140), such as a screw or a bolt, which extends inside the cover (104) from the first cover part (106) to the second cover part (108).

## Patentansprüche

1. Messvorrichtung (100), umfassend:
eine Abdeckung (104), umfassend einen ersten (106) und einen zweiten (108) Abdeckungsteil, die miteinander verbunden sind, wodurch eine Schnittstelle (110) zwischen dem ersten (106) und dem zweiten (108) Abdeckungsteil gebildet wird, wobei der erste Abdeckungsteil (106) erste Fixiermittel (112, 206, 508) umfasst und der zweite Abdeckungsteil (108) zweite Fixiermittel (112', 206', 510) umfasst,
ein aufgewickeltes Messband, das innerhalb der Abdeckung (104) angeordnet ist und über eine Öffnung (412) in der Abdeckung (104) ausziehbar und einziehbar ist, und
ein Verbindungselement (102, 202, 302, 502), das an einer Peripherie der Abdeckung (104) angeordnet ist und mit den ersten (112, 206, 508) und zweiten (112', 206', 510) Fixiermitteln verbunden ist, wobei das Verbindungselement (102, 202, 302, 502) einen Brückenabschnitt (132, 308) bildet, der sich in einer Richtung von dem ersten Abdeckungsteil (106) zu dem zweiten Abdeckungsteil (108) über die Schnittstelle (110) erstreckt, wobei eine Durchführung (126) unter einer unteren Fläche (134) des Brückenabschnitts (132, 308) gebildet ist, wobei die untere Fläche (134) in Richtung der Abdeckung (104) ausgerichtet ist, **dadurch gekennzeichnet, dass**
die Abdeckung (104) den aufgewickelten Abschnitt des Messbandes vollständig abdeckt,
wobei die Abdeckung (104) eine Ausnehmung (124) umfasst, und wobei die Durchführung (126) durch die Ausnehmung (124) und den Brückenabschnitt (132, 308) des Verbindungselements (102, 202, 302, 502) definiert ist.

2. Messvorrichtung (100) nach Anspruch 1, wobei das Verbindungselement (102, 202, 302, 502) einen ersten (113, 213, 114, 204, 504) und einen zweiten Anbringungsabschnitt (113', 213', 114', 204', 506) umfasst, die voneinander beabstandet sind.

3. Messvorrichtung (100) nach Anspruch 2, wobei der erste (504) und der zweite (506) Anbringungsabschnitt jeweils mit beiden von den ersten (508) und zweiten (510) Fixiermitteln verbunden sind.

4. Messvorrichtung (100) nach Anspruch 2, wobei der erste Anbringungsabschnitt (113, 213, 114, 204) mit den ersten Fixiermitteln (112, 206) verbunden ist und der zweite Anbringungsabschnitt (113', 213', 114', 204') mit den zweiten Fixiermitteln (112', 206') verbunden ist.

5. Messvorrichtung (100) nach Anspruch 1, wobei die Ausnehmung (124) durch einen ersten Ausnehmungsabschnitt auf dem ersten Abdeckungsteil (106) und einen zweiten Ausnehmungsabschnitt auf dem zweiten Abdeckungsteil (108) gebildet wird.

6. Messvorrichtung (100) nach einem der vorhergehenden Ansprüche, wobei sich eine geometrische Achse der Durchführung (126) im Wesentlichen in derselben Ebene befindet, wie das aufgewickelte Messband.

7. Messvorrichtung (100) nach einem der vorhergehenden Ansprüche, wobei die ersten (112, 206) und zweiten (112', 206') Fixiermittel eine Gewindebohrung umfassen, die dafür ausgelegt ist, eine Schraube (116) zur Verbindung der Verbindungselemente (102, 202, 302) aufzunehmen.

8. Messvorrichtung (100) nach einem der Ansprüche 1 bis 6, wobei die Anbringungsabschnitte (113, 113', 213, 213', 114, 114', 204, 204', 504, 506) und/oder die ersten (112, 206, 508) und zweiten (112', 206', 510) Fixiermittel Vorsprünge zur Bereitstellung einer Schnappverbindung zwischen der Abdeckung (104) und dem Verbindungselement (102, 202, 302, 502) umfassen.

9. Messvorrichtung (100) nach einem der vorhergehenden Ansprüche, wobei die Öffnung an einem vorderen Abschnitt der Abdeckung (104) angeordnet ist und das Verbindungselement (102, 202, 302, 502) an einem hinteren Abschnitt der Abdeckung (104) angeordnet ist.

10. Messvorrichtung (100) nach einem der vorhergehenden Ansprüche, wobei das Verbindungselement (102, 202, 302, 502) aus einem metallischen Material besteht.

11. Messvorrichtung (100) nach einem der vorhergehenden Ansprüche, wobei die Messvorrichtung vom Typ her eine Messvorrichtung mit langem Band ist.

12. Messvorrichtung (100) nach einem der vorhergehenden Ansprüche, umfassend Befestigungsmittel (140), wie eine Schraube oder ein Bolzen, die sich innerhalb der Abdeckung (104) von dem ersten Abdeckungsteil (106) zu dem zweiten Abdeckungsteil (108) erstrecken.

## Revendications

1. Dispositif de mesure (100) comprenant :
un capot (104) comprenant une première (106) et une seconde (108) pièces de capot qui sont interconnectées entre elles en formant ainsi une interface (110) entre lesdites première (106) et seconde (108) pièce de capot, ladite première pièce de capot (106) comprenant un premier moyen de fixation (112, 206, 508) et la seconde pièce de capot (108) comprenant un second moyen de fixation (112', 206', 510),
une bande de mesure enroulée disposée dans ledit capot (104) et qui est extensible et rétractable via une ouverture (412) dudit capot (104), et un élément de connexion (102, 202, 302, 502) positionné à une périphérie dudit capot (104) est connecté auxdits premier (112, 206, 508) et second moyens de fixation (112', 206', 510), ledit élément de connexion (102, 202, 302, 502) formant une section de pontage (132, 308) s'étendant en travers de ladite interface (110) dans une direction partant de ladite première pièce de capot (106) jusqu'à ladite seconde pièce de capot (108), un passage (126) étant formé sous une surface inférieure (134) de ladite section de pontage (132, 308), laquelle surface inférieure (134) est dirigée vers ledit capot (104), **caractérisé en ce que**
ledit capot (104) recouvre complètement la section enroulée de ladite bande de mesure,
ledit capot (104) comprenant un retrait (124) et ledit passage (126) étant défini par ledit retrait (124) et ladite section de pontage (132, 308) dudit élément de connexion (102, 202, 302, 502).

2. Dispositif de mesure (100) selon la revendication 1, dans lequel ledit élément de connexion (102, 202, 302, 502) comprend une première (113, 213, 114, 204, 504) et une seconde (113', 213', 114', 204', 506) sections de rattachement espacées l'une de l'autre.

3. Dispositif de mesure (100) selon la revendication 2, dans lequel la première (504) et la seconde (506) sections de rattachement sont chacune connectée auxdits deux premier (508) et second (510) moyens de fixation.

4. Dispositif de mesure (100) selon la revendication 2, dans lequel ladite première (113, 213, 114, 204) section de rattachement est connectée audit premier moyens de fixation (112, 206) et ladite seconde (113', 213', 114', 204') section de rattachement est connectée audit second moyen de fixation (112', 206').

5. Dispositif de mesure (100) selon la revendication 1, dans lequel ledit retrait (124) est formé par une première section en retrait sur la première pièce de capot (106) et une seconde section en retrait sur la seconde pièce de capot (108).

6. Dispositif de mesure (100) selon l'une quelconque des revendications précédentes, dans lequel un axe géométrique dudit passage (126) est sensiblement dans le même plan que ladite bande de mesure enroulée.

7. Dispositif de mesure (100) selon l'une quelconque des revendications précédentes, dans lequel lesdits premier (112, 206) et second (112', 206') moyens de fixation comprennent un trou fileté apte à recevoir une vis (116) pour la connexion dudit élément de connexion (102, 202, 302).

8. Dispositif de mesure (100) selon l'une quelconque des revendications précédentes, dans lequel lesdites sections de rattachement (113, 113', 213, 213', 114, 114', 204, 204', 504, 506) et/ou lesdits premier (112, 206, 508) et second (112', 206', 510) moyens de fixation comprennent des saillies permettant d'établir une connexion à déclic entre ledit capot (104) et ledit élément de connexion (102, 202, 302, 502).

9. Dispositif de mesure (100) selon l'une quelconque des revendications précédentes, dans lequel ladite ouverture est positionnée au niveau d'une section avant dudit capot (104) et ledit élément de connexion (102, 202, 302, 502) est positionné au niveau d'une section arrière dudit capot (104).

10. Dispositif de mesure (100) selon l'une quelconque des revendications précédentes, dans lequel l'élément de connexion (102, 202, 302, 502) est en matériau métallique.

11. Dispositif de mesure (100) selon l'une quelconque des revendications précédentes, dans lequel ledit dispositif de mesure est un type de dispositif de mesure à bande longue.

12. Dispositif de mesure (100) selon l'une quelconque des revendications précédentes, comprenant un moyen de fixation (140) tel qu'une vis ou un boulon qui s'étend à l'intérieur du capot (104) de la première pièce de capot (106) à la seconde pièce de capot (108).
